# EUROPÄISCHE PATENTSCHRIFT

(11) **EP 0 848 986 B1**
(45) Veröffentlichungstag und Bekanntmachung des Hinweises auf die Patenterteilung: **17.07.2002**
(21) Anmeldenummer: 97120915.0
(22) Anmeldetag: 28.11.1997
(51) Int. Cl.: B01D 53/94

(54) **Verfahren zur Verminderung der Stickoxide im Abgas von Verbrennungsmotoren**
Method of reducing nitrogen oxides in exhaust gases of internal combustion engines
Méthode pour réduire des oxydes d'azotes dans le gaz d'échappement des moteurs à combustion interne

(30) Priorität: 21.12.1996 DE 19653958
(43) Veröffentlichungstag der Anmeldung: 24.06.1998
(73) Patentinhaber: OMG AG & Co. KG, 63457 Hanau (DE)
(72) Erfinder: van den Tillaart, Johan A.A., Dr., 63579 Freigericht (DE); Leyrer, Jürgen, Dr., 79618 Rheinfelden (DE); Lox, Egbert, Dr., 63457 Hanau (DE); Kreuzer, Thomas, Dr., 61184 Karben (DE); Eckhoff, Stephan, 31515 Wunsdorf (DE)
(74) Vertreter: Stellbrink, Axel

(56) Entgegenhaltungen:
- EP-A- 0 559 021
- DE-A- 2 046 180
- DE-A- 4 215 942
- US-A- 5 517 848

## Beschreibung

Die Erfindung betrifft ein Verfahren zur Verminderung der Stickoxide im mageren Abgas von Verbrennungsmotoren durch katalytische Reduktion an einem Reduktionskatalysator unter Verwendung der im Abgas ebenfalls enthaltenen Kohlenwasserstoffe und Kohlenmonoxid als Reduktionsmittel zu Stickstoff, Wasser und Kohlendioxid, wobei vor dem Reduktions Katalysator Frischluft in dem Abgas Strom eingedüst wird. Ein solches Verfahren ist aus der DE 4 215 942 A1 bekannt.

Bei diesem Verfahren erfolgt die Regelung der Sekundän Luftzugabe nach Maßgabe Abgaszusammensetzung.

Das Abgas von Dieselmotoren und von mager betriebenen Otto-Motoren (sogenannte Magermotoren) weist während der normalen Betriebsphasen neben unverbrannten Kohlenwasserstoffen, Kohlenmonoxid und Stickoxiden einen hohen Anteil von 3 bis 10 Vol.-% Sauerstoff auf. Wegen des überstöchiometrischen Gehaltes des Abgases an Sauerstoff ist es nicht möglich, alle drei Schadstoffe nach dem bei Otto-Motoren üblichen Dreiwege-Verfahren gleichzeitig umzusetzen. Otto-Motoren werden gewöhnlich mit Luftzahlen λ nahe um 1 herum betrieben, während Dieselmotoren und Magermotoren mit Luftzahlen von etwa 1,2 und höher arbeiten. Die Luftzahl λ ist das auf den stöchiometrischen Betrieb normierte Luft/Kraftstoffverhältnis (Kilogramm Luft/ Kilogramm Kraftstoff).

Die unverbrannten Kohlenwasserstoffe und Kohlenmonoxid im Dieselabgas und im Abgas von Magermotoren können relativ leicht durch Oxidationskatalysatoren umgesetzt werden. Für die Umsetzung der Stickoxide müssen dagegen spezielle Reduktionskatalysatoren eingesetzt werden. Solche Katalysatoren werden zum Beispiel in "Design Aspects of Lean NOₓ-Catalysts for Gasoline and Diesel Engine Applications" von Leyrer et al. in SAE-Paper No. 95 2495, 1995 und in "Catalytic reduction of NOₓ with hydrocarbons under lean diesel exhaust gas conditions" von Engler et al. in SAE-Paper No. 93 0735, 1993 beschrieben. Es werden Katalysatoren auf Basis von Zeolithen eingesetzt, die mit verschiedenen katalytisch aktiven Metallen (zum Beispiel Kupfer oder Platin) ausgetauscht sein können.

Diese sogenannten DENOX-Katalysatoren reduzieren die Stickoxide bei gleichzeitiger Oxidation von Kohlenwasserstoffen und Kohlenmonoxid. Die Umsetzungsraten für die einzelnen Schadstoffkomponenten sind stark von der Abgastemperatur abhängig. Mit steigender Abgastemperatur setzt zunächst die Oxidation der Kohlenwasserstoffe und Kohlenmonoxid ein und erreicht innerhalb eines Temperaturintervalls von etwa 150 bis 175°C Oxidationsraten von über 90 %. Bei weiter steigender Temperatur bleibt die Umsetzung der Kohlenwasserstoffe konstant. Die Abgastemperatur, bei der eine Umsetzungsrate von 50 % für den jeweiligen Schadstoff erreicht wird, wird als die Anspringtemperatur für diesen Schadstoff bezeichnet.

Die Umsetzungsrate für Stickoxide folgt der Umsetzungsrate der Kohlenwasserstoffe. Sie steigt jedoch nicht monoton an, sondern durchläuft bei Temperaturen, bei denen die Oxidation der Kohlenwasserstoffe nahezu ihren Maximalwert erreicht hat, ein Maximum und fällt dann mit steigender Temperatur wieder bis auf nahezu Null ab. Optimale Umsetzungsraten für die Stickoxide werden also nur in einem schmalen Temperaturfenster erreicht.

Die Umsetzungskurven für die einzelnen Schadstoffe hängen sehr von der Formulierung des jeweiligen Katalysators ab. Das gilt auch für die Stickoxide: Lage und Breite des Temperaturfensters sowie der in diesem Fenster maximal erreichbare Umsetzungsgrad hängen von der Katalysatorformulierung ab. Es sind sogenannte Niedrigtemperatur-Katalysatoren bekannt, die ihre maximale Stickoxidumsetzung bei Temperaturen zwischen 200 und 250°C erreichen. Bei Hochtemperatur-Katalysatoren liegt das Maximum der Stickoxidumsetzung oberhalb von 300°C.

Die starke Temperaturabhängigkeit der Umsetzungsraten für die Stickoxide stellt ein großes Problem bei der Reinigung von Dieselabgasen dar, da die Motoraustrittstemperatur der Abgase von Dieselfahrzeugen im Betrieb je nach Fahrbedingungen zwischen etwa 150 und 500°C schwanken kann. Hohe Umsetzungsraten liegen deshalb nur während kurzer Betriebsphasen vor, während derer die Abgastemperatur im optimalen Bereich des verwendeten Katalysators liegt.

Problematisch ist in diesem Zusammenhang auch der Trend moderner Katalysatorentwicklungen, Katalysatoren mit immer niedrigeren Anspringtemperaturen zu entwickeln. Bei diesen Katalysatoren ist natürlich auch das Fenster für die maximale Umsetzung der Stickoxide zu niedrigeren Temperaturen verschoben, so daß bei höheren Abgastemperaturen kaum noch Stickoxide umgesetzt werden.

Um Stickoxidumsetzungen auch über einen breiteren Temperaturbereich zu gewährleisten wurde schon versucht, Niedrigtemperatur- und Hochtemperatur-Katalysatoren miteinander zu kombinieren oder zusätzliche Kohlenwasserstoffe als Reduktionsmittel kurz vor dem Katalysator in das Abgas einzudüsen.

Aufgabe der vorliegenden Erfindung ist es, ein Verfahren anzugeben, welches mit einfachen Maßnahmen eine hohe Umsetzung der Stickoxide auch bei Temperaturen oberhalb der maximalen Stickoxidumsetzung des verwendeten Katalysators gewährleistet.

Diese Aufgabe wird durch ein gattungsgemäßes Verfahren gelöst, welches dadurch gekennzeichnet ist, daß die Temperatur des Abgases vor dem Reduktionskatalysator durch Eindüsen von Frischluft in den Abgasstrom auf einen Wert gekühlt wird, bei dem die Umsetzungsrate für die Stickoxide maximal ist.

Die Wirksamkeit eines DENOX-Katalysators wird also erfindungsgemaß dadurch verbessert, daß das Abgas vor dem Eintritt in den Katalysator immer auf die Temperatur abgekühlt wird, bei der der benutzte Katalysator seine maximale Umsetzung für die Stickoxide aufweist.

Die Kühlung des Abgases erfolgt durch Eindüsen von kalter Umgebungsluft in den Abgasstrom zwischen Motor und Katalysator, wobei die Regelung der Abgastemperatur mit Hilfe einer Temperaturmessung vor dem Katalysatoreingang vorgenommen wird.

Mit der vorliegenden Erfindung ist es möglich, die Abgastemperatur vor dem Katalysator immer im optimalen Arbeitsbereich zu halten, auch wenn die Motoraustrittstemperatur des Abgases wesentlich höher liegt. Somit können optimale Umsetzungsraten für die Stickoxide über einen weiten Bereich der Motoraustrittstemperatur des Abgases eingehalten werden. Die Kohlenmonoxid- und Kohlenwasserstoffumsetzungsraten werden dadurch nicht beeinträchtigt.

Hohe Abgastemperaturen erfordern das Eindüsen von großen Mengen Luft in den Abgasstrom, um die Temperatur im Katalysator konstant zu halten. Der dadurch erhöhte Volumenstrom beziehungsweise die geringere Verweilzeit der Schadstoffkomponenten im Abgas wirken sich jedoch kaum negativ auf die Umsetzungsraten aus: Mit zunehmender Lufteinblasung erniedrigen sich die Anspringtemperaturen für die Kohlenwasserstoffe. Der Stickoxidumsatz bleibt aber annähernd konstant. Die Gründe hierfür sind die zunehmende Sauerstoffkonzentration und die abnehmenden Konzentrationen von Stickoxiden und Wasser im Abgas. Sauerstoff wirkt sich bis zu einem gewissen Grad positiv und Stickoxid und Wasser wirken sich mit zunehmender Konzentration negativ auf das Anspringverhalten der Kohlenwasserstoffe aus. Ferner bewirkt eine zu niedrigeren Temperaturen hin verschobene Anspringtemperatur gewöhnlich eine höhere maximale Stickoxidumsetzung.

Ein weiterer Vorteil einer konstant niedrigen Katalysatortemperatur ist, daß der Katalysator keiner Alterung durch Sinterung ausgesetzt ist, so daß seine hohe anfängliche Aktivität über einen langen Zeitraum aufrecht erhalten werden kann. Diese Tatsache sollte es möglich machen, weniger temperaturstabile aber hoch aktive Katalysatoren einzusetzen, die bei höheren Temperaturen schnell desaktiviert werden würden.

An das Regelsystem für die Sekundärlufteinblasung sind keine großen Ansprüche zu stellen, da der Katalysator aufgrund seiner hohen Wärmekapazität im Vergleich zur Gasphase recht träge in bezug auf Temperaturänderungen reagiert. Daher sollten sich kleine Temperaturspitzen oder kurzfristige "Unterkühlungen" des Abgases kaum nachhaltig auf die Umsetzungen auswirken. Eine zusätzliche Kraftstoffeinspritzung in den Abgasstrom zur selektiven Reduktion der Stickoxide kann leicht mit der Sekundärlufteinblasung kombiniert werden. Im Stadtverkehr ist das Abgas verhältnismäßig kalt, so daß hier kaum eine Kühlung erforderlich ist. Auf Langstrecken, bei der das Abgas relativ hohe und konstante Temperaturen besitzt, ist die Regelung wenig kompliziert aber hoch effektiv.

Der Frischluft können weitere gas- beziehungsweise dampfförmige Reduktionsmittel zugemischt werden.

Die Erfindung wird im folgenden durch ein Beispiel näher erläutert. Es zeigen:
- Figur 1:: Ein Abgasreinigungssystem zur Durchführung des erfindungsgemäßen Verfahrens.
- Figur 2:: Kohlenmonoxid-, Kohlenwasserstoff- und Stickoxidumsetzungsraten in Abhängigkeit von der Motoraustrittstemperatur des Dieselabgases bei herkömmlicher Betriebsweise des Abgasreinigungssystems.
- Figur 3:: Kohlenmonoxid-, Kohlenwasserstoff- und Stickoxidumsetzungsraten in Abhängigkeit von der Motoraustrittstemperatur des Dieselabgases bei Betrieb des Abgasreinigungssystems nach dem erfindungsgemäßen Verfahren.

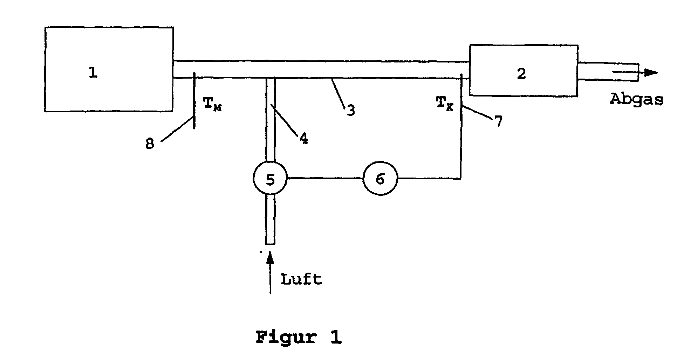

Figur 1 zeigt ein Abgasreinigungssystem zur Durchführung des erfindungsgemäßen Verfahrens. Das vom Motor 1 kommende Abgas wird über einen Reduktionskatalysator 2 an die Umgebungsluft abgegeben. In die Abgasleitung 3 mündet eine Zuleitung 4 für Frischluft. Die Frischluft wird von einer Luftpumpe 5 in das Abgas eingeblasen. Die Luftpumpe wird von einem Regler 6 derart geregelt, daß die kurz vor dem Katalysator mit einem Thermoelement 7 gemessene Abgastemperatur T_{K} einen voreingestellten konstanten Wert aufweist. Mit dem Thermoelement 8 kann die Motoraustrittstemperatur T_{M} des Abgases gemessen werden. Ohne zusätzliche Lufteinblasung ist T_{K} nur geringfügig niedriger als T_{M}.

### Vergleichsbeispiel

An einer Synthesegasanlage wurden die Umsetzungsraten eines Pt/Al₂O₃-SiO₂-Katalysators mit 1,77 g Pt/l Katalysatorvolumen in Abhängigkeit von der simulierten Motoraustrittstemperatur T_{M} gemessen. Die Zusammensetzung des Abgases ist in Tabelle 1 aufgelistet. Diese Zusammensetzung entspricht einer Luftzahl λ von 1,345.

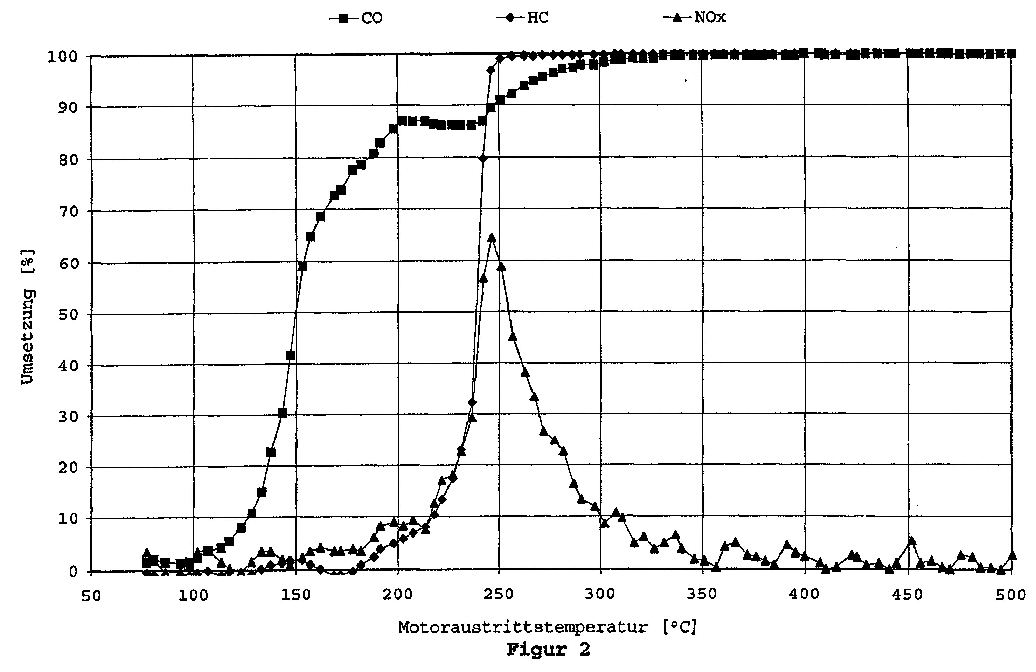

Der Katalysator besaß einen Durchmesser von 2,54 cm und eine Länge von 7,5 cm. Das Abgas wurde mit einer Raumgeschwindigkeit von 50 000 h⁻¹ über diesen Katalysator geleitet. Dabei wurde die simulierte Motoraustrittstemperatur T_{M} von 75 auf 500°C mit einer Rate von 15°C/min gesteigert. Die während der Aufheizphase gemessenen Umsetzungsraten für die einzelnen Schadstoffe sind in Figur 2 über der Motoraustrittstemperatur aufgetragen.

Die Anspringtemperatur für Kohlenmonoxid liegt bei 150°C, für die Kohlenwasserstoffe bei 240°C. Das Fenster für die Stickoxidumsetzung liegt zwischen 225 und 275°C mit einem Maximum von 64 % bei 245°C.

**Tabelle 1:**

| Abgaszuammensetzung | |
|---|---|
| **Komponente** | **Konzentration [Vol.-%]** |
| CO | 0,035 |
| HC | 0,240 |
| NO | 0,027 |
| H₂ | 0,012 |
| CO₂ | 10,700 |
| O₂ | 6,000 |
| H₂O | 10,000 |
| SO₂ | 0,002 |
| N₂ | 72,984 |
| λ = 1,345 | |

### Beispiel

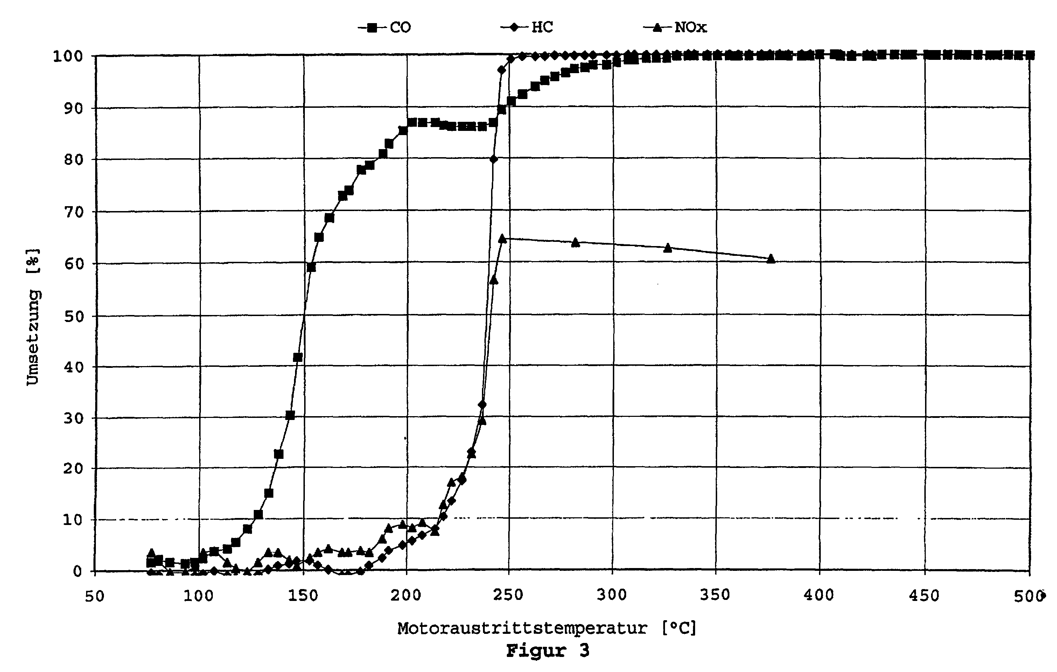

Die Messungen des Vergleichsbeispiels wurden wiederholt, jedoch wurde jetzt die Abgastemperatur vor dem Katalysator T_{K} nach Erreichen einer Motoraustrittstemperatur T_{M} von 245°C durch Einblasen von Luft in die Abgasleitung konstant auf diesen Wert geregelt. Die zur Verdünnung und Abkühlung des Abgases verwendete Luft wies eine Temperatur von 0°C auf. Die während der Aufheizphase gemessenen Umsetzungsraten für die einzelnen Schadstoffe sind in Figur 3 über der Motoraustrittstemperatur aufgetragen.

Tabelle 2 enthält die für die jeweilige Motoraustrittstemperatur T_{M} notwendige Verdünnungsluft in Volumenprozent bezogen auf den Abgasstrom, um die Abgastemperatur vor dem Katalysator T_{K} auf 245°C abzukühlen. Außerdem sind der jeweilige Sauerstoffgehalt des verdünnten Abgases und die erzielten Umsetzungsgrade für die Stickoxide angegeben.

**Tabelle 2**

| **Temperatur Motoraustritt T**_{**M**}**[°]** | **Temperatur Katalysatoreintritt T**_{**K**}**[°]** | **Luftmenge [Vol.-%]** | **Sauerstoff-Gehalt [Vol.-%]** | **NO**_{**x**}**-Umsetzung [%]** |
|---|---|---|---|---|
| 75 | 75 | 0 | 6 | |
| 245 | 245 | 0 | 6 | 64 |
| 282 | 245 | 20 | 8,4 | 63,6 |
| 325 | 245 | 40 | 10,1 | 62,6 |
| 376 | 245 | 60 | 11,4 | 60,5 |

Mit dem erfindungsgemäßen Abgasreinigungsverfahren können also mit dem hier verwendeten Katalysator auch bei Motoraustrittstemperaturen von 376°C noch Umsetzungsgrade für die Stickoxide von 60 % erzielt werden, die nur wenig unter dem maximalen Umsetzungsgrad von 64 % liegen. Ohne Abkühlung des Abgases würde der Umsetzungsgrad für eine Motoraustrittstemperatur von 376°C bei unter 1 % liegen.

## Patentansprüche

1. Verfahren zur Verminderung der Stickoxide im mageren Abgas von Verbrennungsmotoren durch katalytische Reduktion an einem Reduktionskatalysator unter Verwendung der im Abgas ebenfalls enthaltenen Kohlenwasserstoffe und Kohlenmonoxid als Reduktionsmittel zu Stickstoff, Wasser und Kohlendioxid,
wobei von dem Reduktions Katalysator Frischluft in dem Abgasstrom eingedüst wird
**dadurch gekennzeichnet,**
**daß** die Temperatur des Abgases vor dem Reduktionskatalysator durch Eindüsen von Frischluft in den Abgasstrom auf einen Wert gekühlt wird, bei dem die Umsetzungsrate für die Stickoxide maximal ist.

2. Verfahren nach Anspruch 1,
**dadurch gekennzeichnet,**
**daß** der Frischluft weitere gas- beziehungsweise dampfförmige Reduktionsmittel zugemischt werden.

## Claims

1. A process for lowering nitrogen oxide levels in lean exhaust gas from internal combustion engines by catalytic reduction on a reduction catalyst using the hydrocarbons and carbon monoxide also present in the exhaust gas as reducing agents to yield nitrogen, water and carbon dioxide, wherein fresh air is injected into the exhaust gas stream upstream from the reduction catalyst,
**characterised in that**,
by injecting fresh air into the exhaust gas stream, the temperature of the exhaust gas upstream from the reduction catalyst is reduced to a value at which the conversion rate for the nitrogen oxides is at its maximum.

2. A process according to claim 1,
**characterised in that**
further reducing agents in gaseous or vapour form are mixed into the fresh air.

## Revendications

1. Procédé pour réduire les oxydes d'azote dans les gaz d'échappement pauvres des moteurs à combustion Interne, par réduction catalytique sur un catalyseur de réduction, en utilisant les hydrocarbures contenus également dans les gaz d'échappement et le monoxyde de carbone en tant qu'agent réducteur, en azote, eau et dioxyde de carbone, dans lequel avant le catalyseur de réduction on injecte de l'air frais dans le courant de gaz d'échappement,
**caractérisé en ce que**
la température des gaz d'échappement avant le catalyseur de réduction est refroidie par injection d'air frais dans le courant de gaz d'échappement, à une valeur à laquelle le taux de conversion pour les oxydes d'azote, est maximal.

2. Procédé selon la revendication 1,
**caractérisé en ce qu'**
à l'air frais on ajoute par mélange d'autres agents de réduction sous forme gazeuse ou vaporisée.
